# EUROPEAN PATENT APPLICATION

(11) **EP 2 755 061 A1**
(43) Date of publication of application: **16.07.2014**
(21) Application number: 13305016.1
(22) Date of filing: 10.01.2013
(51) Int. Cl.: G01V 3/20, E21B 49/00

(54) **Digitizing in a pad of a downhole tool exposed to hydrostatic pressure**

(71) Applicant: Services Pétroliers Schlumberger, 75007 Paris (FR); SCHLUMBERGER TECHNOLOGY B.V., 2514 JG The Hague (NL); Schlumberger Holdings Limited, Tortola 1110 (VG); PRAD Research and Development Limited, Road Town, Tortola 1110 (VG)
(72) Inventor: Vessereau, Patrick, 92142 Clamart Cedex (FR)
(74) Representative: Rzaniak, Martin

(57) **Abstract**

Systems and methods are provided for acquiring measurements from a formation at multiple measuring electrodes in a pad of a downhole tool and digitizing the multiple analog measurements to transmit a single digitized signal out of the pad. The pad includes circuitry configured to digitize analog measurements and process the digitized signal. In some embodiments, a clock frequency may be used to digitize the analog measurements. The downhole tool may be an imaging tool suitable for operating in environments of relatively high hydrostatic pressure.

## Description

### BACKGROUND

This disclosure relates generally to downhole tools and more specifically to digitizing a downhole tool signal in a hydrostatic pressure environment.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

Many downhole tools have been developed to determine properties of geological formations surrounding wells. One such downhole tool is referred to as a resistivity tool. Resistivity tools may inject a current into the surrounding geological formation using an injection electrode. The current may return to the tool from the geological formation via a return electrode. In general, the injection electrode may represent a current-measuring electrode (referred to as a measuring electrode) through which this current may be measured. By measuring the current, resistivity tools may determine the impedance, or resistivity, of the surrounding formation. Since different types of geological formations may have different resistivities (impedances), determining the resistivity of the surrounding formation may provide an indication of the properties of the geological formation surrounding the well. For example, resistivity measurements may be used to obtain an image of the geological formation in the well.

Downhole tools may have various configurations of measuring electrodes depending on a parameter to be measured and conditions of a borehole (e.g., type, size, environment in the borehole). Some configurations may involve intricate electronics and complex circuitry, all of which functions in the relatively high hydrostatic pressure environment in a borehole. Such environments may contribute to systematic and thermal noise which may affect the quality of measurements being taken by the downhole tool, as well as affect the integrity of the tool itself.

### BRIEF DESCRIPTION OF THE DRAWINGS

FIG. 1 is a schematic diagram of a downhole system in accordance with an embodiment;

FIG. 2 is a schematic diagram of a downhole tool having multiple pads, in accordance with an embodiment;

FIG. 3 is a schematic diagram representing signal processing techniques for multiple sensors in a pad, in accordance with an embodiment; and

FIG. 4 is a schematic diagram representing a digitized signal from multiple sensor measurements, in accordance with an embodiment.

### DETAILED DESCRIPTION

One or more specific embodiments of the present disclosure will be described below. These described embodiments are examples of the presently disclosed techniques. Additionally, in an effort to provide a concise description of these embodiments, certain features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it may be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

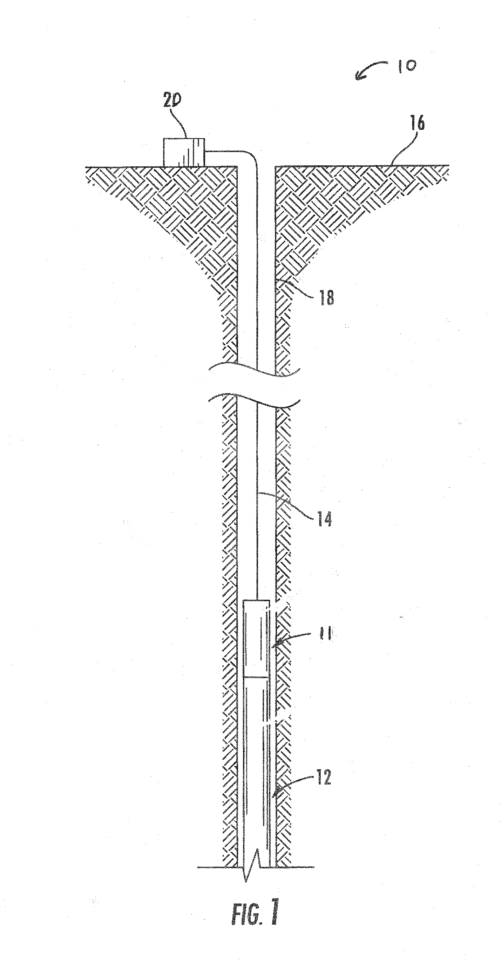

FIG. 1 shows a downhole system 10 cable head 11 connected at its lower end to a logging tool 12. An upper end of the cable head 11 is secured to a cable 14 in this embodiment. The cable 14 may be, for example, a wireline cable extending to the surface 16 of a well or hole 18 and is operable to lower the cable head 11 and one or more logging tools, such as logging tool 12, down to an area where formations and parameters are determined and recorded during logging operations. A vertical well 18 is shown but it should be understood that it can be highly deviated or even horizontal in another example. During a logging operation, data may be transmitted from the logging tool 12 to the cable 14 through the cable head 11. Within the cable 14, the data may be transmitted to a data-transmission and acquisition system 20 at the surface 16.

While a wireline cable is provided as an example of one implementation of the cable 14, the downhole system 10 in the present application may include drilling or logging systems, such as measurement-while-drilling (MWD) systems, logging-while-drilling (LWD) systems, wireline systems, coiled tubing systems, testing systems, completions systems, productions systems, or combinations thereof. Furthermore, the logging tool 12 discussed herein may include any tool suitable for use in the downhole system 10.

In some embodiments, the logging tool 12 may be a downhole imaging tool suitable obtaining an image of formation surrounding the well 18. For example, a downhole imaging tool may be suitable for obtaining resistivity or micro-resistivity measurements. The downhole imaging tool may measure the resistivity of the formation by injecting a current into the surrounding formation using an injection electrode. The current may return to the tool from the geological formation via a return electrode. In general, the injection electrode may represent a current-measuring electrode through which this current may be measured. By measuring the current, the impedance, or resistivity, of the surrounding formation may be determined. The measured resistivity and/or impedance may be used to obtain an image of the formation surrounding the well 18. In some embodiments, the downhole tool 12 may be suitable for operating in borehole environments having relatively high hydrostatic pressure.

In one embodiment, the body of the downhole tool 12 may have one or more extendable arms carrying sensor pads. In use, the arm or arms may be extended until the pad is placed against the wall of the borehole, at which point measurements are made using the sensors on the pad. In some embodiments, multiple arms may extend multiple pads against a portion of the circumference of a borehole. The tool may be moved along the borehole such that the pad is disposed across the borehole wall and makes multiple measurements along the length of the borehole.

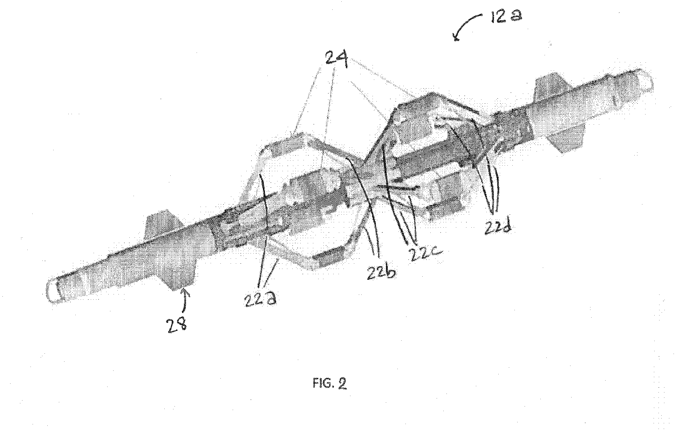

For example, FIG. 2 is a schematic configuration of a downhole tool having one or more extendable arms, according to embodiments of the invention. The downhole tool 12a may have one or more sets of arms 22a, 22b, 22c, 22d (four arms in each set) located spaced apart in the axial direction on the downhole tool 12a. Each arm is provided with a connection for a measurement pad 24. In one embodiment, a centraliser or standoff 28 may be positioned at the bottom of the downhole tool 12a.

As the pads may operate in relatively high hydrostatic pressure environments, electronic components in the pads 24 may also be subject to the affects of operating in a high hydrostatic pressure environment. In some embodiments, each of the pads 24 may include functional electronic components for acquiring, processing, and transmitting measurements associated with the downhole formation. Such a design may result in a tool having a reduced size and increased level of integration. Furthermore, in some embodiments, the number of connections or wires in the downhole system 10, the data acquisition and signal processing may be digitally performed in the pad 24, and a digitized signal may be transmitted out of the pad 24.

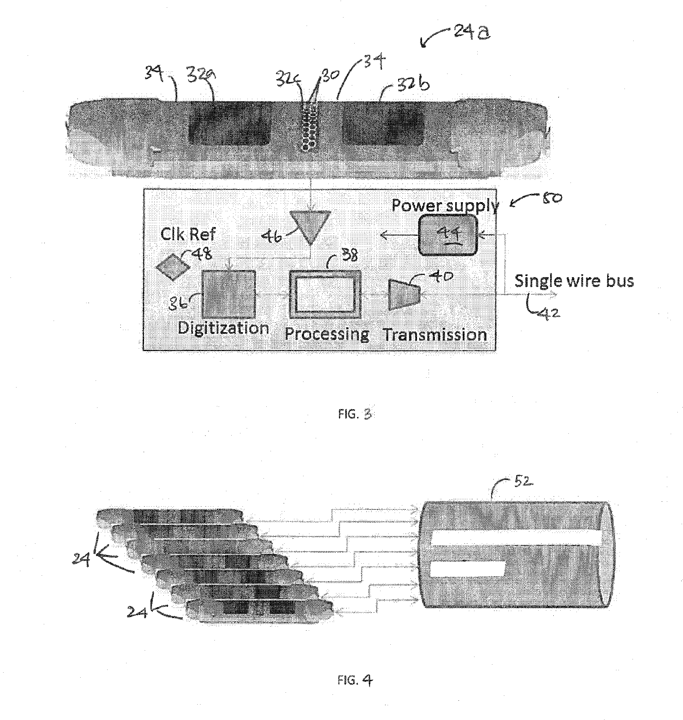

One example of an embodiment of a pad 24 is illustrated in the schematic diagram of FIG. 3, where the pad 24a includes measuring electrodes 30 and source electrodes 32a, 32b, and 32c. The source electrodes 32a, 32b, and 32c may all be separated by an insulator 34, and the measuring electrodes 30 may also be insulated from the source electrode 32c. The measuring electrodes 30 may measure current flow between the source electrodes (e.g., between source electrodes 32a and 32c and between source electrodes 32b and 32c) through the formation of the borehole. Such a configuration of the measuring electrodes 30 may increase measurement density. However, acquiring, processing, and transmitting signals from a large number of measuring electrodes 30 may involve complex circuitry within a pad, as well as a large number of wires transmitting signals from each measuring electrode 30 out of the pad.

In accordance with embodiments of this disclosure, data acquired from each measuring electrode 30 may be processed in pad circuitry 50 in each pad 24. The pad circuitry 50 may include electronic components suitable for digitizing (step 36) the data measured at each measuring electrode 30, and this digitized signal may then be processed (step 38). Furthermore, the processed digital signal may be transmitted (step 40) out of the pad on a single wire bus 42, reducing the number of connections or wires extending out of each pad (i.e., one bus to transmit data from all measuring electrodes 30 instead of one connection for each measuring electrode 30). The transmission of data may be powered using a power supply 44. In some embodiments, the digitization may involve using an analog circuit 46 for measurement signal shaping and gain control. Various techniques may be used to digitize the measured signal. For example, in one embodiment, a clock reference 48 may be utilized. As disclosed in the embodiment represented in FIG. 3, embodiments include digitizing measurements received at multiple measuring electrodes 30 in a pad 24 to transmit a digitized signal representing data from the multiple measuring electrodes 30 through a single bus 42 out of a pad 24.

Additionally, embodiments also include transmitting a digitized signal representing data from multiple pads 24 in a downhole tool 12. The schematic diagram illustrated in FIG. 4 represents the transmission of digital signals from multiple pads 24 to a control system 52. The control system 52 may process the digital signals received from each pad 24 (e.g., via a bus 42) and transmit a signal indicative of the pad outputs out of the downhole system 10.

Various refinements of the features noted above may exist in relation to various aspects of this disclosure. Further features may also be incorporated in these various aspects as well. These refinements and additional features may exist individually or in any combination. For instance, various features discussed below in relation to one or more of the illustrated embodiments may be incorporated into any of the above-described aspects of this disclosure alone or in any combination. The brief summary presented above is intended to familiarize the reader with certain aspects and contexts of embodiments of this disclosure without limitation to the claimed subject matter.

## Claims

1. A downhole system comprising:
a downhole tool suitable for measuring characteristics of a formation in a borehole, wherein the downhole tool comprises one or more pads, wherein each of the one or more pads comprises:
one or more measuring electrodes, each configured to measure characteristics of the formation; and
circuitry configured to digitize the measured characteristics and transmit a digitized signal corresponding to the measured characteristics out of the pad.

2. The downhole system of claim 1, wherein the circuitry comprises a clock reference for digitizing the measured characteristics.

3. The downhole system of claim 1, wherein the circuitry comprises an analog circuit configured to process the measured characteristics.

4. The downhole system of claim 1, wherein the circuitry comprises a processor configured to process the digitized signal.

5. The downhole system of claim 1, wherein the circuitry comprises a processor configured to control the digitizing of the measured characteristics to transmit a digitized signal.

6. The downhole system of claim 1, wherein the circuitry comprises a power source configured to supply power for one or more of digitizing the measured characteristic, processing the digital signal, and transmitting the digital signal out of the pad.

7. The downhole system of claim 1, comprising a controller configured to process multiple digital signals each transmitted from multiple pads of the one or more pads.

8. The downhole system of claim 7, wherein the controller is configured to transmit a combined digital signal out of the downhole system, wherein the combined digital signal is based on the multiple digital signals each transmitted from the multiple pads.

9. The downhole system of claim 1, wherein the downhole tool comprises a downhole imaging tool.

10. The downhole system of claim 9, wherein the one or more pads of the downhole imaging tool each comprises:
one or more source electrodes; and
a plurality of measuring electrodes configured to measure a current from a current path between the formation and the one or more source electrodes.

11. A method comprising:
measuring formation properties to measure a characteristic of a borehole formation using a downhole tool;
digitizing the measured characteristics within a pad of the downhole tool; and
transmitting the digitized signal out of the pad.

12. The method of claim 11, wherein digitizing the measured characteristics comprises applying a clock reference to a measured analog signal to result in a digitized signal.

13. The method of claim 11, comprising processing the digitized signal within the pad before transmitting the digitized signal out of the pad.

14. The method of claim 11, wherein digitizing the measured characteristics within the pad comprises digitizing an analog measurement from each of a plurality of measuring electrodes on the pad.

15. The method of claim 14, wherein transmitting the digitized signal comprises transmitting a digitized signal representative of the analog measurements from each of the plurality of measuring electrodes.
